# EUROPEAN PATENT APPLICATION

(11) **EP 3 474 470 A1**
(43) Date of publication of application: **24.04.2019**
(21) Application number: 17197561.8
(22) Date of filing: 20.10.2017
(51) Int. Cl.: H04L 1/00, H04B 10/54, H04L 5/00

(54) **PROBABILISTIC SIGNAL SHAPING AND FORWARD ERROR CORRECTION USING SUBCARRIER MULTIPLEXING**

(71) Applicant: Nokia Solutions and Networks Oy, 02610 Espoo (FI)
(72) Inventor: ANDERS, Eriksson, Tobias, 70435 Stuttgart (DE); SCHMALEN, Laurent, 70435 Stuttgart (DE); CHAGNON, Mathieu, 70193 Stuttgart (DE)
(74) Representative: MERH-IP Matias Erny Reichl Hoffmann Patentanwälte PartG mbB

(57) **Abstract**

An optical communication system employing redundant data encoding and subcarrier multiplexing according to which unshaped parity bits and shaped information bits are transmitted using different respective sets of subcarriers of the modulated optical carrier. In an example embodiment, the redundant data encoding is implemented using serial application of a shaping code and an FEC code. The subcarriers are allocated such that the set of subcarriers allocated for the transmission of the unshaped parity bits generated using the FEC code has a higher average SNR than the set of subcarriers allocated for the transmission of the shaped information bits generated using the shaping code. Some embodiments can advantageously be used in IMDD systems to reduce the penalty to the effective shaping gain caused by the transmission of the unshaped parity bits. Some embodiments are compatible with OFDM.

## Description

### BACKGROUND

### Field

The present disclosure relates to optical communication equipment and, more specifically but not exclusively, to methods and apparatus for transmitting and receiving communication signals using probabilistic signal shaping, forward error correction, and subcarrier multiplexing.

### Description of the Related Art

This section introduces aspects that may help facilitate a better understanding of the disclosure. Accordingly, the statements of this section are to be read in this light and are not to be understood as admissions about what is in the prior art or what is not in the prior art.

Signal shaping can provide energy savings often referred to as the shaping gain. In a typical implementation of signal shaping, constellation symbols of relatively large energy are transmitted less frequently than constellation symbols of relatively small energy. For a linear communication channel, the shaping gain can theoretically approach 1.53 dB.

Signal shaping can also be applied to communication channels that are receive-power constrained in addition to or instead of being transmit-power constrained.

### SUMMARY OF SOME SPECIFIC EMBODIMENTS

Disclosed herein are various embodiments of an optical communication system employing redundant data encoding and subcarrier multiplexing according to which unshaped parity bits and shaped information bits are transmitted using different respective sets of subcarriers of the modulated optical carrier. In an example embodiment, the redundant data encoding is implemented using serial application of a shaping code and an FEC code. The subcarriers are allocated such that the set of subcarriers allocated for the transmission of the unshaped parity bits generated using the FEC code has a higher average SNR than the set of subcarriers allocated for the transmission of the shaped information bits generated using the shaping code. Some embodiments can advantageously be used in IMDD systems to reduce the penalty to the effective shaping gain caused by the transmission of the unshaped parity bits. Some embodiments are compatible with OFDM.

Some embodiments lend themselves to operating procedures in which allocation of multiple shaping codes and/or FEC codes to the subcarriers can be carried out with relatively high degree of spectral granularity. In some such embodiments, the spectral granularity can be such that the encoding corresponding to each individual subcarrier is separately optimized and then applied in the corresponding optical communication system.

According to an example embodiment, provided is an apparatus comprising: an optical data transmitter that comprises an optical modulator and an electronic encoder, the electronic encoder being configured to: redundancy-encode an input data stream to generate a plurality of constellation-symbol streams; and drive the optical modulator to modulate an optical carrier such that each of the constellation-symbol streams is carried by a different respective modulated subcarrier of the optical carrier; wherein a first subset of the constellation-symbol streams is such that an occurrence rate of different constellation symbols in each constellation-symbol stream of the first subset decreases as symbol energy increases; and wherein a second subset of the constellation-symbol streams is such that different constellation symbols in each constellation-symbol stream of the second subset occur therein at a constant occurrence rate.

According to another example embodiment, provided is an apparatus comprising: an optical data receiver that comprises an optical demodulator and an electronic decoder, the electronic decoder being configured to process a plurality of streams of values representing an electrical RF signal generated by the optical demodulator in response to receiving a modulated optical carrier, each of the streams of values representing a respective one of a plurality of constellation-symbol streams, each carried by a different respective modulated subcarrier of the modulated optical carrier, the electronic decoder being configured to redundancy-decode the plurality of streams of values to recover a source data stream redundancy-encoded in the plurality of constellation-symbol streams and carried by the modulated optical carrier; wherein a first subset of the constellation-symbol streams is such that an occurrence rate of different constellation symbols in each constellation-symbol stream of the first subset decreases as symbol energy increases; and wherein a second subset of the constellation-symbol streams is such that different constellation symbols in each constellation-symbol stream of the second subset occur therein at a constant occurrence rate.

### BRIEF DESCRIPTION OF THE DRAWINGS

Other aspects, features, and benefits of various disclosed embodiments will become more fully apparent, by way of example, from the following detailed description and the accompanying drawings, in which:
FIG. 1 shows a block diagram of a communication system according to an embodiment;
FIGs. 2A-2D graphically show example constellations that can be used in the communication system of FIG. 1 according to some embodiments;
FIG. 3 shows a block diagram of an electronic encoder that can be used in the communication system of FIG. 1 according to an embodiment;
FIG. 4 shows a block diagram of an output interface that can be used in the electronic encoder of FIG. 3 according to an embodiment;
FIG. 5 shows a block diagram of an output interface that can be used in the electronic encoder of FIG. 3 according to an alternative embodiment;
FIG. 6 shows a method of generating a configuration-control signal that can be used in the communication system of FIG. 1 according to an embodiment;
FIGs. 7A-7B graphically illustrate two examples of SNR data that can be used in the method of FIG. 6 according to an embodiment;
FIGs. 8A-8D graphically illustrate example spectra of modulated optical signals that can be transmitted in the communication system of FIG. 1 according to several embodiments;
FIG. 9 shows a block diagram of an electronic decoder that can be used in the communication system of FIG. 1 according to an embodiment;
FIG. 10 shows a block diagram of an input interface that can be used in the electronic decoder of FIG. 9 according to an embodiment;
FIG. 11 shows a block diagram of an input interface that can be used in the electronic decoder of FIG. 9 according to an alternative embodiment;
FIG. 12 shows a block diagram of an electronic encoder that can be used in the communication system of FIG. 1 according to another embodiment; and
FIG. 13 shows a block diagram of an electronic decoder that can be used in the communication system of FIG. 1 according to another embodiment.

### DETAILED DESCRIPTION

The following acronyms/abbreviations are used in the description of various embodiments and/or in the accompanying drawings:
- ADC: Analog-to-Digital Converter;
- AWGN: Additive White Gaussian Noise;
- DAC: Digital-to-Analog Converter;
- DMT: Discrete Multi-Tone;
- DMUX: Demultiplexer;
- DSP: Digital Signal Processor;
- E/O: Electrical-to-Optical;
- FEC: Forward Error Correction;
- FFT: Fast Fourier Transform;
- FIFO: Fixed-In/Fixed-Out;
- FIVO: Fixed-In/Variable-Out;
- IFFT: Inverse Fast Fourier Transform;
- IQ: In-phase/Quadrature;
- IMDD: Intensity Modulation/Direct Detection;
- LO: Local Oscillator;
- MUX: Multiplexer;
- OFDM: Orthogonal Frequency-Division Multiplexing;
- O/E: Optical-to-Electrical;
- PAM: Pulse Amplitude Modulation;
- QAM: Quadrature Amplitude Modulation;
- RF: Radio Frequency;
- SNR: Signal-to-Noise Ratio;
- VIFO: Variable-In/Fixed-Out;
- VIVO: Variable-In/Variable-Out;

There are two general types of signal shaping that are referred to as geometric and probabilistic, respectively. Geometric shaping can be implemented to optimize the location of constellation points (symbols) on the complex plane for a fixed (but not necessarily uniform) symbol probability. Probabilistic shaping can be implemented to optimize the probability of constellation symbols that are located on a fixed (but not necessarily uniform) grid on the complex plane. Although both types of signal shaping can theoretically be implemented to achieve the shaping gain of up to 1.53 dB for an additive-white-Gaussian-noise (AWGN) channel, probabilistic shaping offers several important advantages over geometric shaping. These advantages include but are not limited to compatibility with conventional (e.g., available off-the-shelf) constellations and forward-error-correction (FEC) codes.

A representative systematic FEC encoder operates to convert an input bit sequence into an expanded bit sequence (FEC codeword) by appending to the input bit sequence a set of parity bits generated using the operative FEC code. A typical FEC code causes the set of parity bits to appear pseudo-random. When a systematic FEC encoder is used to encode the output of a shaping encoder (also sometimes referred to as a distribution matcher), each of the resulting FEC codewords contains a "shaped" set of information bits and the corresponding "unshaped" set of parity bits. The shaping encoder causes the shaped set of information bits to contain bit-words the values of which have a non-uniform rate of occurrence and form a distribution histogram in accordance with the operative shaping code. In contrast, the FEC encoder causes the unshaped set of parity bits to contain bit-words the values of which have a substantially uniform (e.g., constant) rate of occurrence. Both sets of bit-words then need to be transmitted over the communication channel using the respective constellation(s). Disadvantageously, the transmission of unshaped parity bits can significantly and adversely affect the effective shaping gain realized in the corresponding communication system. This problem becomes even more pronounced in intensity-modulation/direct-detection (IMDD) systems, in which the transmitted constellation symbols cannot be used to carry any sign bits that can be loaded with parity bits without a penalty to the shaping gain.

At least some of the above-indicated problems in the state of the art are addressed by various embodiments employing a subcarrier-multiplexing scheme in which the adverse effects on the effective shaping gain of the transmission of unshaped parity bits can be mitigated by appropriately selecting and configuring some subcarriers for predominantly transmitting unshaped parity bits while using other subcarriers for predominantly transmitting shaped information bits. In an example embodiment, spectral regions characterized by relatively high values of the signal-to-noise ratio (SNR) are used for placing therein one or more subcarriers mapped to the unshaped parity bits, whereas spectral regions characterized by relatively low values of the SNR are used for placing therein one or more subcarriers mapped to the shaped information bits. Some embodiments can advantageously be used in IMDD systems to reduce (e.g., minimize) the penalty to the effective shaping gain caused by the transmission of unshaped parity bits. This reduction can be achieved, e.g., because a configuration in which the subcarriers mapped to the unshaped parity bits are transmitted under high-SNR conditions typically results in a lower penalty (if any) to the effective shaping gain than a comparable configuration in which the subcarriers mapped to the unshaped parity bits are transmitted under low-SNR conditions.

Some embodiments are compatible with orthogonal frequency-division multiplexing (OFDM) and/or discrete multitone (DMT) modulation.

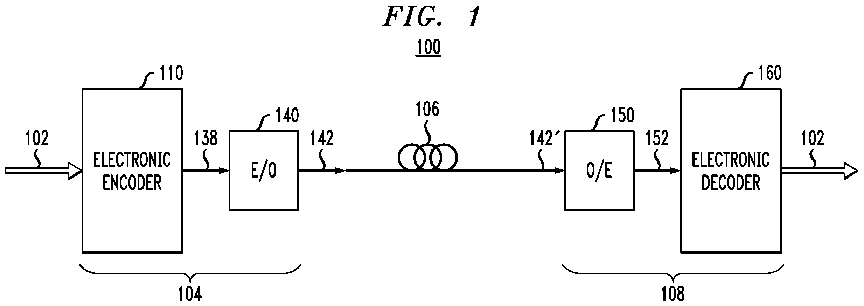

FIG. 1 shows a block diagram of a communication system **100** according to an embodiment. System **100** comprises a transmitter **104** and a receiver **108** that are coupled to one another by way of a communication link **106.** In an example embodiment, communication link **106** is implemented using an optical fiber or a fiber-optic cable.

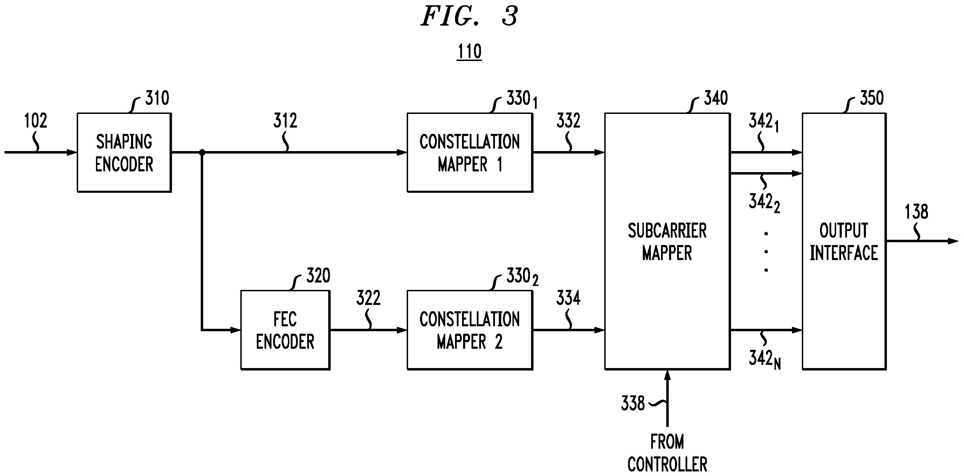

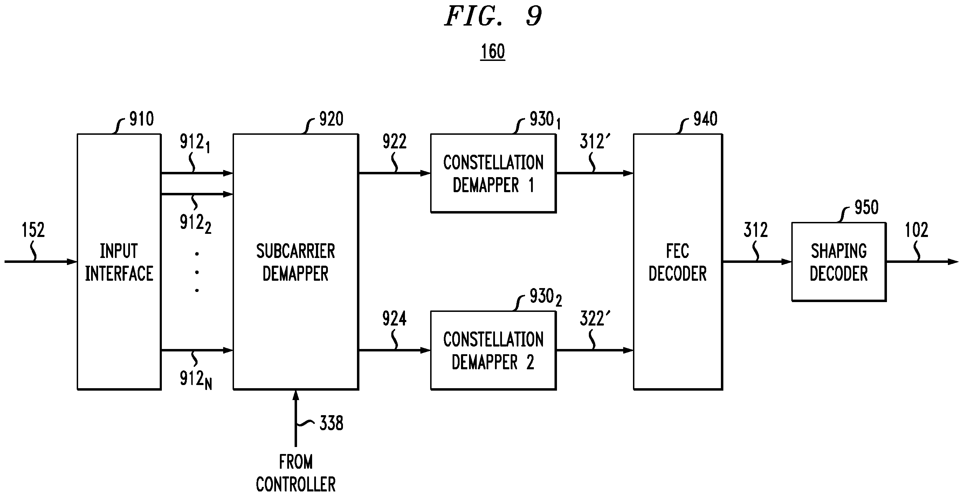

System **100** carries out probabilistic signal shaping, forward error correction, and subcarrier multiplexing using (i) an electronic encoder **110** appropriately interfaced with an electrical-to-optical (E/O) converter (also sometimes referred-to as the transmitter front end) **140** at transmitter **104,** and (ii) an optical-to-electrical (O/E) converter (also sometimes referred-to as the receiver front end) **150** appropriately interfaced with an electronic decoder **160** at receiver **108.** Example embodiments of electronic encoder **110** are described in more detail below in reference to FIGs. 3-5. Example embodiments of electronic decoder **160** are described in more detail below in reference to FIGs. 9-11. In an example embodiment, one or both of electronic encoder **110** and electronic decoder **160** can be implemented using a respective digital signal processor (DSP).

Electronic encoder **110** operates to generate an electrical radio-frequency (RF) signal **138** in response to receiving input data **102.** In response to electrical RF signal **138,** E/O converter **140** generates a corresponding modulated optical signal **142** suitable for transmission over link **106** and having redundancy-encoded thereon input data **102.** In an example embodiment, E/O converter **140** is an optical modulator that can be implemented as known in the art using: (i) a laser configured to generate an optical carrier wave; (ii) a modulator configured to generate modulated optical signal **142** by modulating the optical carrier wave generated by the laser; and (iii) a driver circuit configured to electrically drive the modulator using electrical RF signal **138,** thereby causing the E/O converter **140** to generate modulated optical signal **142.** Depending on the embodiment, the modulator used in E/O converter **140** can be implemented using one or more optical IQ modulators, Mach-Zehnder modulators, amplitude modulators, phase modulators, and/or intensity modulators. In some embodiments, E/O converter **140** can employ directly modulated lasers, e.g., laser diodes configured to generate modulated optical signals in response to modulated electrical currents that drive the diodes.

Link **106** typically imparts noise and other linear and/or nonlinear signal impairments onto signal **142** and delivers a resulting impaired (e.g., noisier) signal **142'** to O/E converter **150** of receiver **108.** O/E converter **150** operates to convert optical signal **142'** into a corresponding electrical RF signal **152.** Electronic decoder **160** then applies redundancy decoding to convert electrical RF signal **152** into output data **102.**

In some embodiments, O/E converter **150** is an optical demodulator that can be configured as known in the pertinent art for coherent (e.g., intradyne or homodyne) detection of signal **142'.** In such embodiments, O/E converter **150** may include: (i) an optical local-oscillator (LO) source; (ii) an optical hybrid configured to optically mix signal **142'** and the LO signal generated by the optical LO source; and (iii) one or more photodetectors configured to convert the optical interference signals generated by the optical hybrid into the corresponding components of electrical RF signal **152.**

In some other embodiments, O/E converter **150** is an optical demodulator that can be configured for direct (e.g., square law, intensity, optical power) detection of signal **142'.** In such embodiments, O/E converter **150** may include a photodiode configured to generate electrical RF signal **152** to be proportional to the intensity (optical power, squared amplitude of the electric field) of signal **142'.**

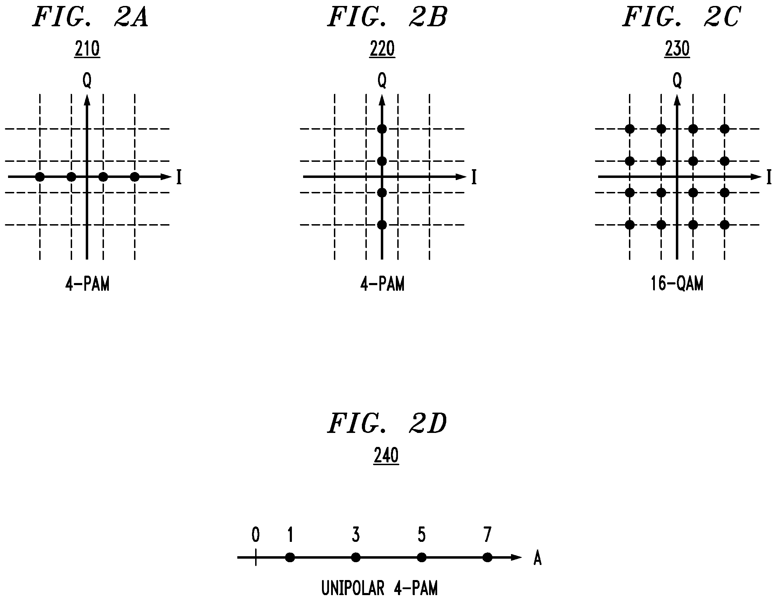

FIGs. 2A-2D graphically show several constellations that can be used in system **100** according to several example embodiments. Each of constellations **210-230** shown in FIGs. 2A-2C is a one-dimensional constellation that is depicted as a set of constituent constellation points on a complex plane whose axes are labeled as I (in-phase) and Q (quadrature), respectively. A constellation **240** shown in FIG. 2D is a unipolar constellation in which each constellation point represents a different respective positive amplitude, A.

A person of ordinary skill in the art will understand that each constellation point in FIGs. 2A-2D represents a corresponding constellation symbol. As used herein, the term "constellation symbol" should be construed to encompass both constellation symbols of a one-dimensional constellation and of a multi-dimensional constellation. An example one-dimensional constellation enables the transmission of a single constellation symbol in a single signaling interval (time slot) over a single dimension of the carrier. In contrast, a multi-dimensional constellation enables the transmission of a single constellation symbol using multiple signaling intervals and/or multiple dimensions of the carrier. A d-dimensional constellation can be constructed using d different one-dimensional constellations or d copies of the same one-dimensional constellation.

FIG. 2A graphically shows a 4-PAM (pulse-amplitude-modulation) constellation **210.** The four constellation points of constellation **210** are all located on the I-axis and can be represented by the real numbers -3, -1, +1, and +3. Each of the constellation points can be used to encode two bits. In an example bit assignment, the first of the two bits (e.g., the most-significant bit, MSB) can represent the sign of the corresponding real number, and the second of the two bits (e.g., the least-significant bit, LSB) can represent the absolute value (e.g., the amplitude) of the corresponding real number. In this bit assignment scheme, the two bits assigned to a constellation point can be referred to as the sign bit and the amplitude bit, respectively.

FIG. 2B graphically shows a 4-PAM constellation **220.** The four constellation points of constellation **220** are all located on the Q-axis and can be represented by the imaginary numbers -3j, -j, +j, and +3j. Each of the constellation points can be used to encode two bits in a manner similar to that of constellation **210** (FIG. 2A).

FIG. 2C graphically shows a 16-QAM (quadrature-amplitude-modulation) constellation **230.** A person of ordinary skill in the art will understand that constellation **230** can be generated using a combination of constellations **210** and **220.** For example, constellation **230** can be conceptually viewed as constellation **210** (FIG. 2A) in which each constellation point is split into four points using constellation **220** (FIG. 2B). Using the latter concept, an IQ modulator of E/O converter **140** can be configured to generate signal **142** that carries constellation points of constellation **230** by (i) generating the I component of signal **142** using constellation **210,** (ii) generating the Q component of signal **142** using constellation **220,** and (iii) appropriately combining the I and Q components.

FIG. 2D graphically shows a unipolar 4-PAM constellation **240.** The four constellation points of constellation **240** are represented by the positive numbers +1, +3, +5, and +7, respectively. Each of the constellation points can be used to encode two bits. The concept of "sign bit" is generally not applicable to constellation **240** because each constellation point may represent a range of phases. For example, in some embodiments, each constellation point of constellation **240** may correspond to a respective circle on a complex plane. In some embodiments, the phase corresponding to a constellation point of constellation **240** may not be controllable and might vary for different instances of that constellation point in a noise-like manner. In some other embodiments, the phase corresponding to a constellation point of constellation **240** may be controllable but not used to encode any useful information. In some embodiments, the axis A of constellation **240** may be aligned with the I axis or the Q axis of the complex plane.

A person of ordinary skill in the art will understand that other constellations that differ from the example constellations of FIGs. 2A-2D can also be used in system **100.** For example, an *m*-PAM constellation (where *m* is an even integer greater than four) can be constructed by expanding constellation **210,** e.g., by placing additional equally spaced constellation points on the I axis (see FIG. 2A). An *n*-PAM constellation (where *n* is an even integer greater than four) can similarly be constructed by expanding constellation **220,** e.g., by placing additional equally spaced constellation points on the Q axis (see FIG. 2B). An IQ modulator of E/O converter **140** can then be configured to generate signal **142** that carries constellation symbols of an (*n*×*m*)-QAM constellation by (i) generating the I component of signal **142** using the *m*-PAM constellation, (ii) generating the Q component of signal **142** using the *n*-PAM constellation, and (iii) appropriately combining the I and Q components.

Some embodiments may use PAM or QAM constellations in which constellation points are not evenly spaced.

FIG. 3 shows a block diagram of electronic encoder **110** according to an embodiment. Input data **102** and electrical RF signal **138** are also shown in FIG. 3 to better illustrate the relationship between the circuits of FIGs. 1 and 3. As shown in FIG. 3, electronic encoder **110** comprises a shaping encoder **310,** an FEC encoder **320,** constellation mappers **330₁** and **330₂**, a subcarrier mapper **340,** and an output interface **350.**

In an example embodiment, shaping encoder **310** is configured to carry out fixed-in/fixed-out (FIFO) probabilistic signal shaping under which a fixed-size block of input data **102** is converted into a fixed-size set of bit-words of an output sequence **312,** two copies of which are applied to constellation mapper **330**₁ and FEC encoder **320,** respectively. Typically, the statistical properties of input data **102** are similar to those of a random or pseudo-random data sequence. However, different bit-word values in output sequence **312** have different respective rates of occurrence and form a distribution histogram dictated by the shaping code used by shaping encoder **310.** In different embodiments, the shaping code can be configured to cause output sequence **312** to have any selected distribution of bit-word values. Some examples of such distributions include, but are not limited to an exponential distribution, a Gaussian distribution, and a Maxwell-Boltzmann distribution. A person of ordinary skill in the art will understand that the shaping code achieves a desired distribution of bit-word values by adding redundancy to the input data.

In some embodiments, shaping encoder **310** may be configured to perform the above-mentioned FIFO conversion in a "streaming" fashion such that the ratio between the number of bits supplied by input data **102** and the number of bit-words in the corresponding output sequence **312** remains constant and does not depend on the size or binary contents of input data **102** after the shaping encoder has executed the pertinent initialization procedures. This feature is different from the corresponding feature of some conventional probabilistic-signal-shaping schemes in which either the size of the input data block or the size of the output set of bit-words, or both, may depend on the binary contents of the input data block. Different variants of such conventional probabilistic-signal-shaping schemes are often referred-to in the relevant literature as variable-in/fixed-out (VIFO), fixed-in/variable-out (FIVO), and variable-in/variable-out (VIVO) schemes.

In some embodiments, shaping encoder **310** maybe configured to generate output sequence **312** using a VIFO shaping code.

For each fixed-size set of bit-words of output sequence **312,** FEC encoder **320** generates a corresponding fixed-size block of parity bits, which is then applied to constellation mapper **330₂** by way of a data stream **322.** The block size is determined by the rate of the FEC code used in FEC encoder **320.** Depending on the particular embodiment and/or properties of link **106,** the rate of the FEC code can be selected and/or changed as appropriate or necessary.

Constellation mapper **330**₁ operates to transform sequence **312** into a corresponding sequence **332** of constellation symbols, wherein constellation symbols of higher energy occur less frequently than constellation symbols of lower energy. The constellation mapping performed by constellation mapper **330**₁ can be implemented in a conventional manner using a suitable constellation, e.g., a constellation analogous to one of the constellations shown in FIGs. 2A-2D. A person of ordinary skill in the art will understand that the non-uniform rate of occurrence of different constellation symbols in sequence **332** is caused by the non-uniform rate of occurrence of different bit-word values in sequence **312** caused by the application of the shaping code.

Constellation mapper **330₂** operates to transform data stream **322** into a corresponding sequence **334** of constellation symbols. The constellation mapping performed by constellation mapper **330₂** can be implemented in a conventional manner using a suitable constellation, e.g., a constellation analogous to one of the constellations shown in FIGs. 2A-2D. In some embodiments, the constellation used in constellation mapper **330₂** may be the same as the constellation used in constellation mapper **330₁**. In some other embodiments, the constellation used in constellation mapper **330₂** may be different from the constellation used in constellation mapper **330₁**.

Typically, different constellation symbols in sequence **334** appear with approximately the same rate of occurrence. A person of ordinary skill in the art will understand that this particular property of sequence **334** is due to the statistical properties of data stream **322** imposed thereupon by the FEC code.

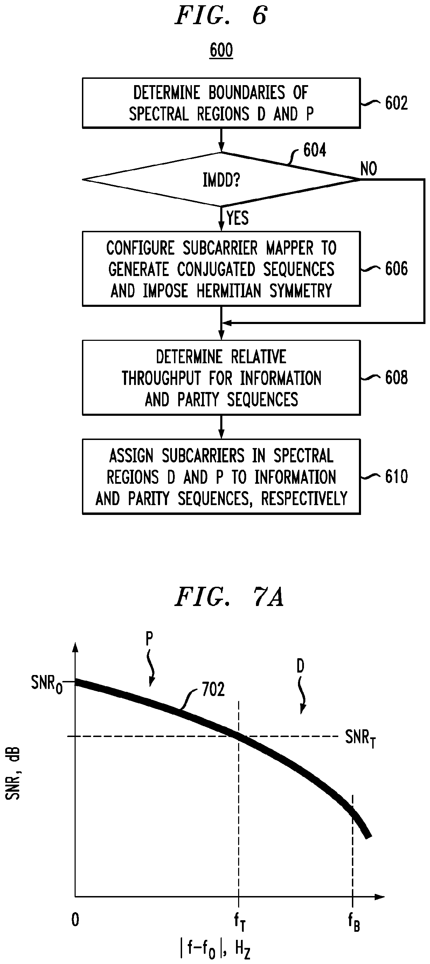

Subcarrier mapper **340** operates to convert constellation-symbol sequences **332** and **334** into constellation-symbol sequences **342₁-342_{N}**, where N is the number of subcarriers that is used in transmitter **104** to generate modulated optical signal **142.** The N subcarriers have baseband frequencies *f*₁, *f*₂, ..., *f*_{N}, respectively, which are up-converted into the corresponding optical-frequency range by E/O converter **140** (FIG. 1). Each of sequences **342₁-342_{N}** is configured to carry constellation symbols to be transmitted using the corresponding one of the subcarriers. The configuration of subcarrier mapper **340,** which determines the manner in which sequences **332** and **334** are converted into constellation-symbol sequences **342₁-342_{N}**, is set using a control signal **338** generated by a configuration controller. Depending on the particular embodiment and/or properties of link **106,** the configuration of subcarrier mapper **340** can be selected and/or changed as appropriate or necessary. An example method that can be used to generate control signal **338** is described in more detail below in reference to FIG. 6.

In some embodiments, some or all of sequences **342₁-342_{N}** may have different respective symbol rates. In some embodiments, some or all of sequences **342₁-342_{N}** may have the same symbol rate. Other pertinent features and characteristics of example embodiments of subcarrier mapper **340** are described in more detail below in reference to FIGs. 6-8.

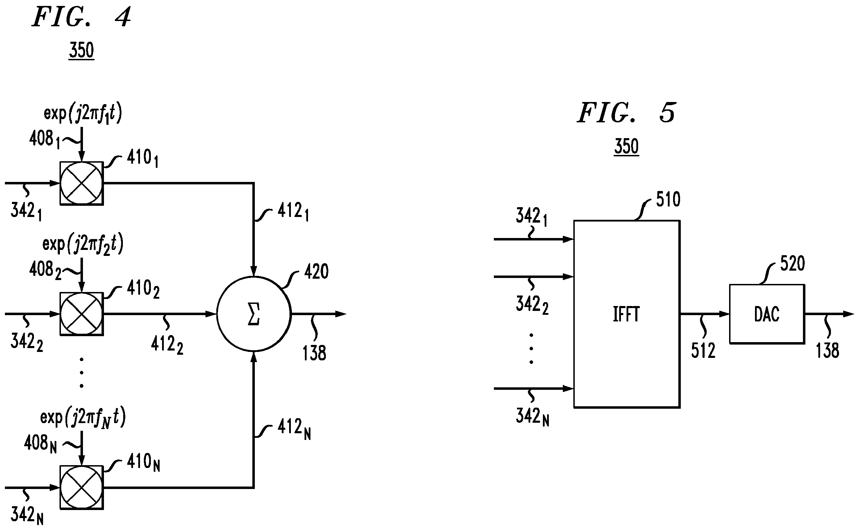

FIG. 4 shows a block diagram of output interface **350** according to an embodiment. In this embodiment, output interface **350** comprises electrical IQ modulators **410₁-410_{N}** and an RF signal combiner **420.** In operation, a modulator **410ₙ** (where n=1, 2, ..., N) modulates a carrier wave **408ₙ** of frequency *f*ₙ using the constellation symbols of sequence **342ₙ** to generate a corresponding modulated electrical RF signal **412ₙ**. RF signal combiner **420** then combines signals **412₁-412_{N}** to generate signal **138.**

FIG. 5 shows a block diagram of output interface **350** according to an alternative embodiment. In this embodiment, output interface **350** comprises an inverse fast-Fourier-transform (IFFT) module **510** and a digital-to-analog converter (DAC) **520.** In operation, IFFT module **510** uses an inverse Fourier transform, as known in the art, to convert sequences **342₁-342_{N}** into a corresponding digital time-domain signal **512.** DAC **520** then converts signal **512** into an analog form to generate signal **138.**

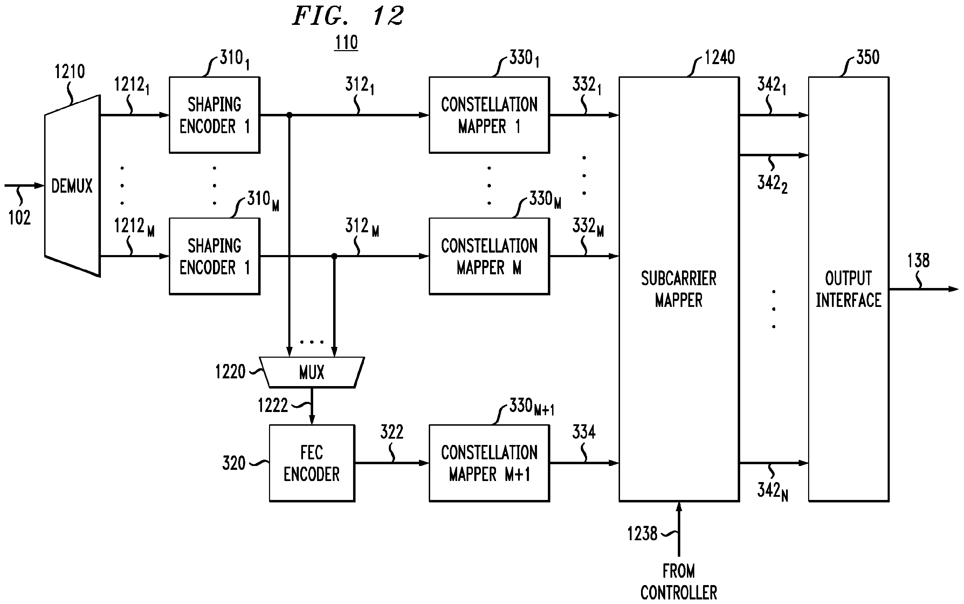

FIG. 6 shows a method **600** of generating control signal **338** (FIG. 3) that can be used by a configuration controller in system **100** according to an embodiment. Some embodiments of method **600** can be used for generating control signal **1238** (FIG. 12). A person of ordinary skill in the art will understand how to adapt method **600** for use in different embodiments of system **100.** The corresponding modifications of method **600** may depend, *inter alia*, on the hardware used in E/O converter **140** and/or O/E converter **150,** as exemplified by FIGs. 4-5 and 10-11.

At step **602** of method **600,** the configuration controller determines spectral regions that can be used for placing therein (i) one or more subcarriers configured to carry constellation symbols of sequence **332** and (ii) one or more subcarriers configured to carry constellation symbols of sequence **334.**

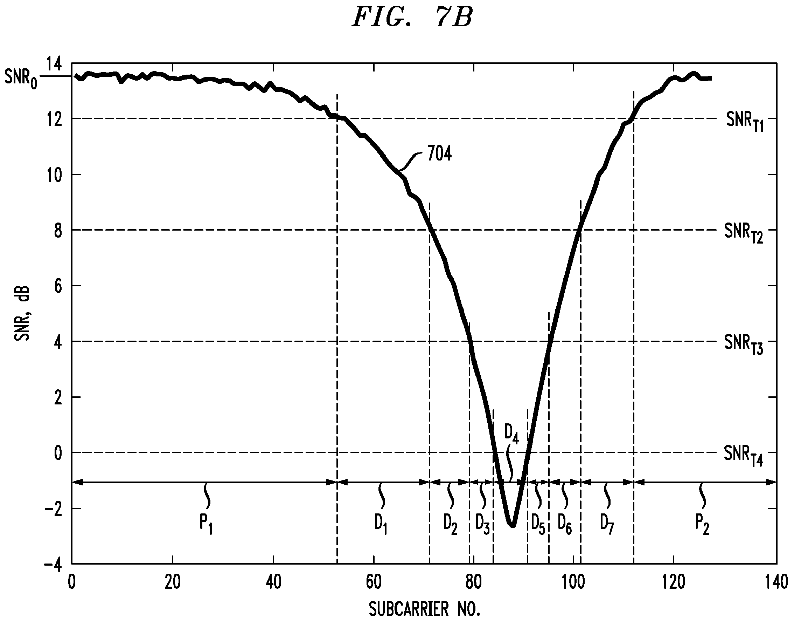

In an example embodiment, the determination of step **602** can be based on available SNR data and an applicable set of SNR threshold values. The available SNR data may include, e.g., one or more of the following: (i) results of a prior frequency-dependent SNR measurement performed at receiver **108** and communicated to the configuration controller and transmitter **104,** e.g., via a control channel; (ii) BER data collected by receiver **108** and communicated to the configuration controller and transmitter **104;** (iii) a channel estimate based, e.g., on an assumption of a "typical" frequency-dependent SNR behavior expected for the particular channel type used in system **100;** (vi) results of a prior frequency-dependent SNR measurement performed at transmitter **104** using signal **142,** etc. The spectral regions in which the SNR is greater than the applicable SNR threshold value (hereafter regions **P**) are then deemed to be suitable for placing therein one or more subcarriers configured to carry constellation symbols of sequence **334.** The spectral regions in which the SNR is smaller than the applicable SNR threshold value (hereafter regions **D**) are similarly deemed to be suitable for placing therein one or more subcarriers configured to carry constellation symbols of sequence **332.** The regions D can be further subdivided using the corresponding additional SNR threshold value(s), e.g., as described below in reference to FIG. 7B.

FIG. 7A graphically illustrates a first example set of SNR data that can be used at step **602** according to an embodiment. The abscissa of the graph shown in FIG. 7A shows the frequency offset with respect to the frequency *f*₀ of the optical carrier. The ordinate of the graph shows the SNR values. A curve **702** represents SNR data corresponding to a first example communication channel that can be used in system **100.** SNR₀ and SNR_{T} denote the maximum and threshold SNR values, respectively. 2*f_{B}* is the channel bandwidth.

If step **602** is performed using the SNR data graphically shown in FIG. 7A, then the following outcome can be expected. Spectral regions **P** include the frequencies between the frequencies *f*₀-*f_{T}* and *f*₀+*f_{T}.* Spectral regions **D** include the frequencies (i) between the frequencies *f*₀-*f_{B}* and *f*₀-*f_{T}* and (ii) between *f*₀+*f_{T}* and *f*₀+*f_{B}*.

FIG. 7B graphically illustrates a second example set of SNR data that can be used at step **602** according to an embodiment. The abscissa of the graph shown in FIG. 7B indicates the subcarrier number. The ordinate of the graph shows the SNR values. A curve **704** represents SNR data corresponding to a second example communication channel that can be used in system **100.** SNR₀ denotes the maximum SNR values. SNR_{T1}-SNR_{T4} denote the applicable SNR threshold values. The value of SNR_{T1} is used to determine the boundaries between the spectral regions **P** and **D.** The values of SNR_{T2}-SNR_{T4} are used to further subdivide the regions **D.**

Curve **704** has a relatively deep spectral null located near subcarrier number ninety. In this particular example, the spectral null is caused by the effects of chromatic dispersion in the corresponding IMDD channel.

If step **602** is performed using the SNR data graphically shown in FIG. 7B, then the following outcome can be expected. The regions **P** include regions **P₁** and **P₂** having subcarrier numbers 0-55 and 112-140, respectively. In contrast to the example of FIG. 7A, the regions **P** are not contiguous and are separated by a spectral gap having subcarrier numbers 56-111, which fall into the regions **D.** The regions **D** include regions **D₁-D₇** having subcarrier numbers 56-70, 71-80, 81-84, 85-90, 91-95, 96-101, and 102-111, respectively.

At step **604,** the configuration controller determines whether or not system **100** operates in an IMDD configuration. This determination can be made, e.g., by reading an appropriate entry from the configuration file. If it is determined that system **100** operates in an IMDD configuration, then the processing of method **600** is directed to step **606.** Otherwise, step **606** is bypassed.

At step **606,** the configuration controller configures subcarrier mapper **340** to generate additional constellation-symbol sequences by applying complex conjugation to sequences **332** and **334.** As known in the pertinent art, complex conjugation can be used to impose Hermitian symmetry on the corresponding pairs of subcarriers to achieve a real-valued signal used to carry information in an IMDD system.

At step **608,** the configuration controller determines the relative throughput required for the transmission of (i) constellation sequence **332** and, if applicable, the corresponding conjugated sequence, and (ii) constellation sequence **334** and, if applicable, the corresponding conjugated sequence. A person of ordinary skill in the art will understand that this determination can be made, e.g., using the rate of the FEC code used by FEC encoder **320** and the results of step **606** (if performed).

At step **610,** the configuration controller uses the relative throughput determined at step **608** and the available SNR data (e.g., illustrated in FIGs. 7A-7B) to assign (i) one or more subcarriers located in spectral regions **P** to constellation sequence **334** and, if applicable, the corresponding conjugated sequence, and (ii) one or more subcarriers located in spectral regions **D** to constellation sequence(s) **332** and, if applicable, the corresponding conjugated sequence(s). A person of ordinary skill in the art will understand that, for an IMDD system **100,** the assignment of step **610** is done in a manner that imposes Hermitian symmetry on the corresponding pairs of subcarriers.

In some embodiments, different spectral regions **D** (e.g., **D₁-D₇**, FIG. 7B) can be used for the sets of subcarriers carrying the shaped data generated using different respective shaping codes executed using different respective shaping encoders (see, e.g., shaping encoders **310₁-310_{M}** in FIG. 12).

In some embodiments, different spectral regions **D** (e.g., **D₁-D₇**, FIG. 7B) can be used for the sets of subcarriers carrying the shaped data that are error-protected using FEC codes of different respective rates.

In some embodiments, method **600** can be repeated several times, e.g., to optimize one or more desired performance characteristics of system **100.** This optimization can be carried out, e.g., by (i) varying one or more additional configuration parameters and (ii) selecting a combination of configuration parameters that provides acceptable (e.g., best) performance characteristics. In an example embodiment, the additional configuration parameters may include one or more of the following: (i) the constellations used in different constellation mappers **330,** e.g., **330**₁ and **330₂**, FIG. 3, or **330₁-330_{M+1},** FIG. 12; (ii) the rate(s) of the FEC code(s) used in FEC encoder **320;** (iii) individual symbol rates for sequences **342₁-342_{N}**; (iv) the number N of subcarriers; and (v) the frequencies *f*₁, *f*₂, ..., *f*_{N} of individual subcarriers.

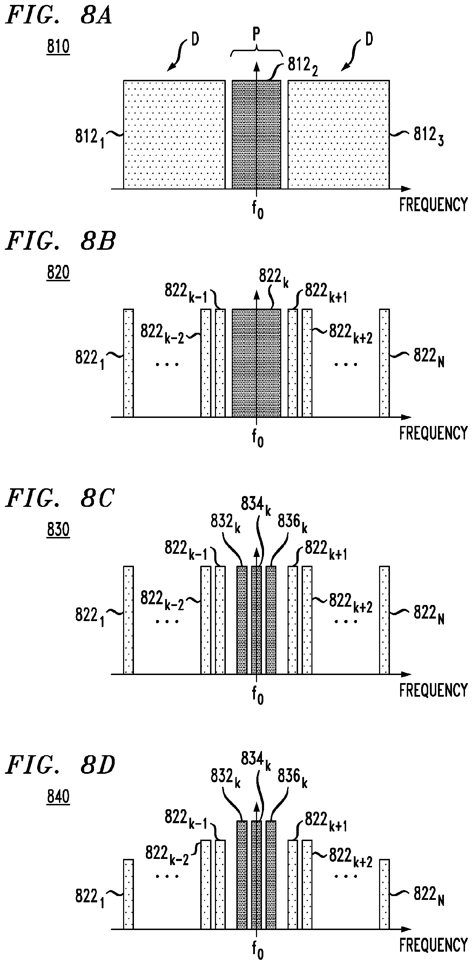

FIGs. 8A-8D graphically illustrate example spectra of modulated optical signal **142** according to several corresponding embodiments.

Spectrum **810** shown in FIG. 8A corresponds to N=3 and has spectral components **812₁-812₃** corresponding to modulated subcarriers n=1, 2, and 3, respectively. Spectral component **812₂** is: (i) approximately centered on the optical carrier frequency *f*₀; (ii) located within the spectral region **P** (also see FIG. 7A); and (iii) configured to carry sequence **334.** Spectral components **812₁** and **812₃** are located within the spectral regions **D** (also see FIG. 7A) and are configured to carry sequence **332.** The symbol rate corresponding to spectral components **812₁** and **812₃** is greater than the symbol rate corresponding to spectral component **812₂,** as indicated in FIG. 8A by the different respective spectral widths.

In an IMDD system **100,** spectral components **812₁** and **812₃** can be generated, e.g., as explained above, with the Hermitian symmetry imposed thereon.

Spectrum **820** shown in FIG. 8B has spectral components **822₁-822_{N}** corresponding to modulated subcarriers n=1, 2, ..., N, respectively. Spectral component **822ₖ** is: (i) approximately centered on the optical carrier frequency *f*₀; (ii) located within the spectral region **P** (also see FIG. 7A); and (iii) configured to carry sequence **334.** Spectral components **822₁-822ₖ₋₁,** and **822ₖ₊₁-822_{N}** are located within the spectral regions **D** (also see FIG. 7A) and are configured to carry sequence **332.** The symbol rate corresponding to spectral component **822ₖ** is greater than the symbol rate corresponding to any one of spectral components **822₁-822ₖ₋₁,** and **822ₖ₊₁-822_{N},** as indicated in FIG. 8B by the different respective spectral widths.

In an IMDD system **100,** spectral components **822₁-822ₖ₋₁,** and **822**_{**k**+**1**}-**822_{N}** can be generated, e.g., as explained above, with the pairwise Hermitian symmetry imposed thereon. For example, spectral components **822ₖ₋₁** and **822ₖ₊₁** can be symmetric in the Hermitian sense. Spectral components **822ₖ₋₂** and **822ₖ₊₂** can also be symmetric in the Hermitian sense, etc.

Spectrum **830** shown in FIG. 8C differs from spectrum **820** (FIG. 8B) in that spectral component **822ₖ** is replaced by three spectral components, which are labeled **832ₖ, 834ₖ,** and **836ₖ,** respectively. As such, spectrum **830** has N₁ (=N+2) modulated subcarriers, where N is the number of modulated subcarriers in spectrum **820.** Similar to spectral component **822ₖ**, spectral components **832ₖ, 834ₖ,** and **836ₖ** are located within the spectral region **P** (also see FIG. 7A) and configured to carry sequence **334** in a partitioned manner. All of the spectral components in spectrum **830** are generated using the same symbol rate, as indicated in FIG. 8C by their identical spectral widths.

In an IMDD system **100,** in addition to spectral components **822₁-822ₖ₋₁,** and **822ₖ₊₁**-**822_{N},** spectral components **832ₖ** and **836ₖ** can also be generated with the Hermitian symmetry imposed thereon.

Spectrum **840** shown in FIG. 8D differs from spectrum **830** (FIG. 8C) in that some of spectral components **822₁-822ₖ₋₁, 832ₖ, 834ₖ, 836ₖ,** and **822**_{**k**+**1**}-**822_{N}** have unequal transmitted power, as indicated in FIG. 8C by their different heights. A person of ordinary skill in the art will understand that this particular feature can be implemented, e.g., using appropriate subcarrier scaling in output interface **350.**

In some other embodiments, an even number of subcarriers can be used. In such embodiments, the optical carrier frequency *f*₀ is located between two adjacent subcarriers, with no subcarrier being centered on the optical carrier frequency *f*₀.

FIG. 9 shows a block diagram of electronic decoder **160** according to an embodiment. Electrical RF signal **152** and output data **102** are also shown in FIG. 9 to better illustrate the relationship between the circuits of FIGs. 1 and 9. As shown in FIG. 9, electronic decoder **160** comprises an input interface **910,** a subcarrier demapper **920,** constellation demappers **930₁** and **930₂,** an FEC decoder **940,** and a shaping decoder **950.**

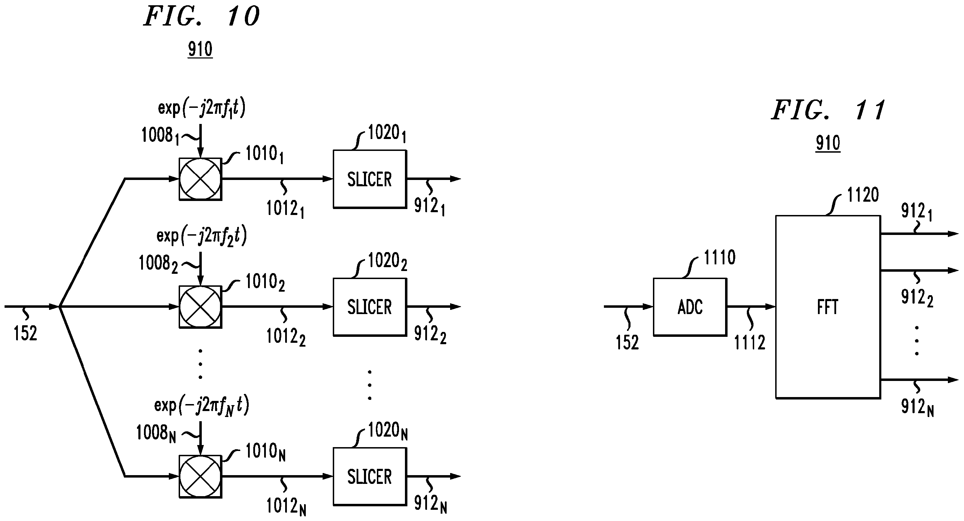

Input interface **910** operates to frequency-demultiplex electrical RF signal **152** and convert each of the resulting modulated frequency components into a corresponding sequence of digital values, thereby generating sequences **912₁-912_{N}.** As indicated above, electrical RF signal **152** is generated by O/E converter by down-converting optical input signal **142'** into the corresponding RF range. Example embodiments of input interface **910** are described in more detail below in reference to FIGs. 10 and 11.

Subcarrier demapper **920** operates to convert sequences **912₁-912_{N}** into sequences **922** and **924** by distributing the digital values carried by sequences **912₁**-**912_{N}** between sequences **922** and **924** in a manner that is inverse to that of subcarrier mapper **340** (FIG. 3). More specifically, sequence **922** receives digital values corresponding to the subcarriers located in spectral regions **D** (also see FIGs. 7-8). Sequence **924** similarly receives digital values corresponding to the subcarriers located in spectral regions **P** (also see FIGs. 7-8). In an example embodiment, the configuration of subcarrier demapper **920,** which determines the manner in which sequences **912₁**-**912_{N}** are converted into sequences **922** and **924,** can be set using a copy of the above-described control signal **338** received from the configuration controller.

Constellation demapper **930₁** operates, in a conventional manner, using the same constellation used in constellation mapper **330**₁ to transform sequence **922** into a corresponding bit-word sequence **312'.** In the absence of transmission errors, bit-word sequence **312'** is the same as bit-word sequence **312** (see FIG. 3). However, typically, bit-word sequence **312'** differs from bit-word sequence **312** due to the deleterious effects of noise and other transmission impairments.

Constellation demapper **930₂** similarly operates using the same constellation used in constellation mapper **330₂** to transform sequence **924** into a corresponding bit-word sequence **322'.** In the absence of transmission errors, bit-word sequence **322'** is the same as data stream **322** (see FIG. 3). However, bit-word sequence **322'** may differ from data stream **322,** e.g., due to the deleterious effects of noise and other transmission impairments.

FEC decoder **940** operates, in a conventional manner, using the same FEC code used in FEC encoder **320** and the parity bits provided by bit-word sequence **322'** to correct errors (if any) in bit-word sequence **312',** thereby recovering bit-word sequence **312.**

Shaping decoder **950** operates, using the same shaping code used in shaping encoder **310,** to convert bit-word sequence **312** back into data **102.**

FIG. 10 shows a block diagram of input interface **910** according to an embodiment. In this embodiment, input interface **910** comprises electrical IQ demodulators **1010₁-1010_{N}** and slicers **1020₁-1020_{N}.** In operation, a demodulator **1010ₙ** (where n=1, 2, ..., N) uses an electrical local oscillator signal **1008ₙ** of frequency *fₙ* to demodulate the corresponding subcarrier of signal **152,** thereby generating a corresponding waveform **1012ₙ**. In each time slot, a slicer **1020ₙ** compares the waveform **1012ₙ** with a plurality of thresholds to generate a corresponding digital sequence **912ₙ**.

FIG. 11 shows a block diagram of input interface **910** according to an alternative embodiment. In this embodiment, input interface **910** comprises an analog-to-digital converter (ADC) **1110** and a fast-Fourier-transform (FFT) module **1120.** In operation, ADC **1110** samples signal **152** at an appropriate sampling rate to generate a corresponding sequence **1112** of digital samples. FFT module **1120** then uses a Fourier transform, as known in the art, to convert sequence **1112** into the corresponding frequency-domain digital sequences **912₁-912_{N}**.

FIG. 12 shows a block diagram of electronic encoder **110** according to another embodiment. This embodiment of electronic encoder **110** uses many of the same elements/components as the embodiment of FIG. 3. These elements/components are labeled in FIG. 12 using the same labels as in FIG. 3. The description that follows primarily focuses on the differences between the embodiments of FIGs. 3 and 12.

In the embodiment of FIG. 12, electronic encoder **110** has M shaping encoders **310,** which are labeled **310₁-310_{M},** where M is an integer greater than one. Each of shaping encoders **310₁-310_{M}** is configurable to use a different respective shaping code. In an example embodiment, the shaping codes for shaping encoders **310₁-310_{M}** can be selected, e.g., based on the SNR characteristics of the channel and on the specifics of the subcarrier-mapping scheme implemented in a subcarrier mapper **1240.** The corresponding selection criteria can be directed, e.g., at optimizing (e.g., maximizing) the effective shaping gain. The different shaping codes typically differ in the bit-word distributions that they create.

Shaping encoders **310₁-310_{M}** are configured to receive input data streams **1212₁**-**1212_{M}**, respectively, generated by a demultiplexer (DMUX) **1210** by appropriately demultiplexing input data **102.** The corresponding output bit-word sequences **312₁-312_{M}** generated by shaping encoders **310₁-310_{M}** are multiplexed using a multiplexer (MUX) **1220.** In response to receiving the resulting multiplexed bit-word sequence **1222** from MUX **1220,** FEC encoder **320** generates a corresponding data stream **322** carrying parity bits.

Constellation mappers **330₁-330_{M}** operate to transform sequences **312₁-312_{M}** generated by shaping encoders **310₁-310_{M},** respectively, into the corresponding constellation-symbol sequences **332₁-332_{M}.** Constellation mapper **330_{M+1}** similarly operates to transform data stream **322** generated by FEC encoder **320** into the corresponding constellation-symbol sequence **334.** In various embodiments, the constellations used in constellation mappers **312₁-312_{M+1}** may be the same or different.

Subcarrier mapper **1240** is functionally analogous to subcarrier mapper **340** in that both operate to generate constellation-symbol sequences **342₁-342_{N}** intended for transmission using subcarrier frequencies *f*₁, *f*₂, ..., *f*_{N}, respectively. However, subcarrier mapper **1240** is also capable of distributing constellation symbols of sequences **332₁-332_{M}** to different respective (e.g., non-overlapping) subsets of sequences **342₁-342_{N}.** In an example embodiment, one or more additional SNR thresholds may be used to partition the spectral regions **D** (also see FIG. 7B) of the channel bandwidth into two or more sub-regions, which can then be used for placing therein the subcarriers configured to carry the different respective subsets of sequences **342₁-342_{N}**. The configuration of subcarrier mapper **1240,** which determines the manner in which sequences **332** and **334** are converted into sequences **342₁-342_{N}**, can be set and changed, e.g., using a control signal **1238** generated by a corresponding configuration controller.

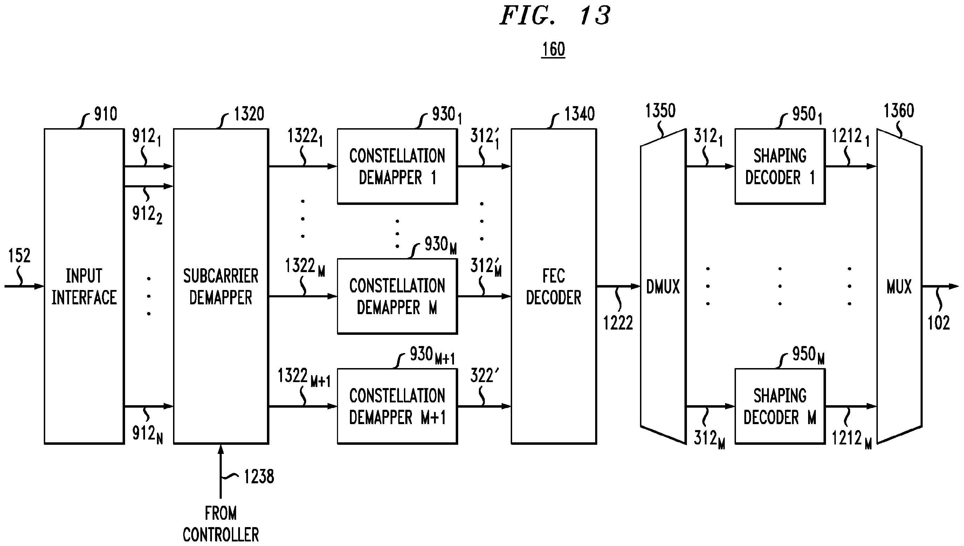

FIG. 13 shows a block diagram of electronic decoder **160** according to another embodiment. This embodiment of electronic decoder **160** uses many of the same elements/components as the embodiment of FIG. 9. These elements/components are labeled in FIG. 13 using the same labels as in FIG. 9. The embodiments of electronic encoder **110** and electronic decoder **160** shown in FIGs. 12 and 13 are complementary to one another and designed to work together in the same embodiment of system **100.**

In the embodiment of FIG. 13, electronic decoder **160** comprises input interface **910,** a subcarrier demapper **1320,** constellation demappers **930₁-930_{M+1}**, an FEC decoder **1340,** a DMUX **1350,** shaping decoders **950₁-950_{M},** and a MUX **1360.**

Input interface **910** can process electrical RF signal **152** and generate sequences **912₁**-**912_{N}** as described above in reference to FIG. 9.

Subcarrier demapper **1320** operates to convert sequences **912₁**-**912_{N}** into sequences **1322₁-1322_{M+1}** by distributing the digital values carried by sequences **912₁**-**912_{N}** between sequences **1322₁-1322_{M+1}** in a manner that is inverse to that of subcarrier mapper **1240** (FIG. 12). More specifically, sequences **1322₁-1322_{M}** receive digital values corresponding to the subcarriers located in spectral regions **D** (also see FIG. 7B). Sequence **1322_{M+1}** similarly receives digital values corresponding to the subcarriers located in spectral regions **P** (also see FIG. 7B). In an example embodiment, the configuration of subcarrier demapper **1320,** which determines the manner in which sequences **912₁**-**912_{N}** are converted into sequences **1322₁**-**1322_{M+1},** can be set using a copy of the above-mentioned control signal **1238** (see FIG. 12) received from the configuration controller.

A constellation demapper **930ₘ** (where m=1, ..., M) operates, in a conventional manner, using the same constellation used in constellation mapper **330ₘ** (see FIG. 12) to transform sequence **1322ₘ** into a corresponding bit-word sequence **312ₘ**'. In the absence of transmission errors, bit-word sequence **312ₘ**' is the same as bit-word sequence **312ₘ** (see FIG. 12). However, typically, at least one of bit-word sequences **312ₘ**' may differ from the corresponding bit-word sequence **312ₘ** due to the deleterious effects of noise and other transmission impairments.

Constellation demapper **930_{M+1}** similarly operates using the same constellation used in constellation mapper **330_{M+1}** to transform sequence **1322_{M+1}** into a corresponding bit-word sequence **322'.** In the absence of transmission errors, bit-word sequence **322'** is the same as data stream **322** (see FIG. 3). However, bit-word sequence **322'** may differ from data stream **322,** e.g., due to the deleterious effects of noise and other transmission impairments.

FEC decoder **1340** operates, in a conventional manner, using the same FEC code used in FEC encoder **320** (FIG. 12) and the parity bits provided by bit-word sequence **322'** to correct errors (if any) in bit-word sequences **312ₘ',** thereby recovering bit-word sequence **1222** (also see FIG. 12).

DMUX **1350** de-multiplexes bit-word sequence **1222** to into bit-word sequences **312₁-312_{M}**.

A shaping decoder **950ₘ** operates, using the same shaping code used in shaping encoder **310ₘ**, to convert bit-word sequence **312ₘ** back into data stream **1212ₘ**.

MUX **1360** reconstructs data **102** by multiplexing data streams **1212₁-1212_{M}**.

According to an example embodiment disclosed above, e.g., in the summary section and/or in reference to any one or any combination of some or all of FIGs. 1-13, provided is an apparatus (e.g., **100,** FIG. 1) comprising: an optical data transmitter (e.g., **104,** FIG. 1) that comprises an optical modulator (e.g., **140,** FIG. 1) and an electronic encoder (e.g., **110,** FIG. 1), the electronic encoder being configured to: redundancy-encode an input data stream (e.g., **102,** FIG. 1) to generate a plurality of constellation-symbol streams (e.g. **342₁-342_{N}**, FIGs. 3, 12); and drive the optical modulator to modulate an optical carrier such that each of the constellation-symbol streams is carried by a different respective modulated subcarrier of the optical carrier (e.g., corresponding to one of baseband frequencies *f*₁, *f*₂, ..*.*, *f*_{N}); wherein a first subset of the constellation-symbol streams (e.g., carrying **332,** FIGs. 3, 12) is such that an occurrence rate of different constellation symbols in each constellation-symbol stream of the first subset decreases as symbol energy increases; and wherein a second subset of the constellation-symbol streams (e.g., carrying **334,** FIGs. 3, 12) is such that different constellation symbols in each constellation-symbol stream of the second subset occur therein at a constant occurrence rate.

In some embodiments of the above apparatus, the electronic encoder comprises: a first shaping encoder (e.g., **310,** FIG. 3) configured to generate a first bit-word stream (e.g., **312,** FIG. 3) by redundancy-encoding the input data stream in a pseudo-probabilistic manner; and an FEC encoder (e.g., **320,** FIG. 3) configured to generate a parity data stream (e.g., **322,** FIG. 3) by redundancy-encoding the first bit-word stream using an FEC code, and wherein the electronic encoder is configured to: generate the first subset of the constellation-symbol streams using the first bit-word stream; and generate the second subset of the constellation-symbol streams using the parity data stream.

In some embodiments of any of the above apparatus, the electronic encoder further comprises at least a second shaping encoder (e.g., **310_{M},** FIG. 12) configured to generate a second bit-word stream (e.g., **312_{M},** FIG. 12) by redundancy-encoding the input data stream in a pseudo-probabilistic manner; and wherein the electronic encoder is further configured to generate the first subset of the constellation-symbol streams using the second bit-word stream.

In some embodiments of any of the above apparatus, the first shaping encoder is configured to use a first shaping code; and the second shaping encoder is configured to use a second shaping code that is different from the first shaping code.

In some embodiments of any of the above apparatus, the electronic encoder further comprises a multiplexer (e.g., **1220,** FIG. 12) configured to generate a multiplexed bit-word stream (e.g., **1222,** FIG. 12) by multiplexing the first bit-word stream and the second bit-word stream; and wherein the FEC encoder is configured to generate the parity data stream by redundancy-encoding the multiplexed bit-word stream using the FEC code.

In some embodiments of any of the above apparatus, the electronic encoder further comprises: a first constellation mapper (e.g., **330₁,** FIG. 3) configured to use a first constellation to convert the first bit-word stream into a corresponding first sequence (e.g., **332,** FIG. 3) of constellation symbols; a second constellation mapper (e.g., **330₂**, FIG. 3) configured to use a second constellation to convert the parity data stream into a corresponding second sequence (e.g., **334,** FIG. 3) of constellation symbols; and wherein the electronic encoder is configured to: generate the first subset of the constellation-symbol streams using the first sequence of constellation symbols; and generate the second subset of the constellation-symbol streams using the second sequence of constellation symbols.

In some embodiments of any of the above apparatus, a communication channel corresponding to the optical carrier has a frequency-dependent SNR (e.g., **702, 704,** FIGs. 7A-7B) within a channel bandwidth; and wherein the electronic encoder comprises a subcarrier mapper (e.g., **340,** FIG. 3; **1240,** FIG. 12) configured to cause: the first subset of the constellation-symbol streams to be carried by a first set of one or more modulated subcarriers of the optical carrier, the one or more modulated subcarriers of the first set being in a spectral region (e.g., **D,** FIGs. 7A-7B) of the channel bandwidth having SNR values that are smaller than a threshold value; and the second subset of the constellation-symbol streams to be carried by a second set of one or more modulated subcarriers of the optical carrier, the one or more modulated subcarriers of the second set being in a spectral region (e.g., **P,** FIGs. 7A-7B) of the channel bandwidth having SNR values that are greater than the threshold value.

In some embodiments of any of the above apparatus, the subcarrier mapper is configured to cause the second set of one or more modulated subcarriers to include at least two modulated subcarriers (e.g., **832-836,** FIG. 8C).

In some embodiments of any of the above apparatus, the subcarrier mapper is configured to cause the second set of one or more modulated subcarriers to include a modulated subcarrier (e.g., **834,** FIG. 8C) approximately centered on the optical carrier.

In some embodiments of any of the above apparatus, the subcarrier mapper is configured to cause the first set of one or more modulated subcarriers to include a first modulated subcarrier (e.g., **812₁**, FIG. 8A) and a second modulated subcarrier (e.g., **812₃,** FIG. 8A) whose frequencies are symmetric with respect to a frequency of the optical carrier.

In some embodiments of any of the above apparatus, the electronic encoder is configured to: cause the first modulated subcarrier to carry a first constellation-symbol stream of the plurality; and cause the second modulated subcarrier to carry a second constellation-symbol stream of the plurality, the second constellation-symbol stream being generated by applying complex conjugation (e.g., at **606,** FIG. 6) to symbols of the first constellation-symbol stream.

In some embodiments of any of the above apparatus, the subcarrier mapper is configured to cause the second set of one or more modulated subcarriers to include a first modulated subcarrier (e.g., **832ₖ**, FIG. 8C) and a second modulated subcarrier (e.g., **836ₖ**, FIG. 8C) whose frequencies are symmetric with respect to a frequency of the optical carrier.

In some embodiments of any of the above apparatus, the electronic encoder is configured to: cause the first modulated subcarrier to carry a first constellation-symbol stream of the plurality; and cause the second modulated subcarrier to carry a second constellation-symbol stream of the plurality, the second constellation-symbol stream being generated using Hermitian symmetry applied (e.g., at **606,** FIG. 6) to symbols of the first constellation-symbol stream.

In some embodiments of any of the above apparatus, the subcarrier mapper is configurable (e.g., by way of **338,** FIG. 3) based on SNR data representing the frequency-dependent SNR within the channel bandwidth.

In some embodiments of any of the above apparatus, the electronic encoder is configured to cause at least some of the constellation-symbol streams to have different respective symbol rates (e.g., as indicated in FIG. 8A or 8B).

In some embodiments of any of the above apparatus, the different respective modulated subcarriers are mutually orthogonal (e.g., in accordance with an OFDM scheme).

According to another example embodiment disclosed above, e.g., in the summary section and/or in reference to any one or any combination of some or all of FIGs. 1-13, provided is an apparatus (e.g., **100,** FIG. 1) comprising: an optical data receiver (e.g., **108,** FIG. 1) that comprises an optical demodulator (e.g., **150,** FIG. 1) and an electronic decoder (e.g., **160,** FIG. 1), the electronic decoder being configured to process a plurality of streams of values (e.g., **912₁-912_{N}**, FIGs. 9, 13) representing an electrical RF signal (e.g., **152,** FIGs., 1, 9, 13) generated by the optical demodulator in response to receiving a modulated optical carrier (e.g., **142',** FIG. 1), each of the streams of values representing a respective one of a plurality of constellation-symbol streams (e.g. **342₁-342_{N}**, FIGs. 3, 12), each carried by a different respective modulated subcarrier of the modulated optical carrier (e.g., corresponding to one of baseband frequencies *f*₁, *f*₂, ..., *f*_{N}), the electronic decoder being configured to redundancy-decode the plurality of streams of values to recover a source data stream (e.g., **102,** FIG. 9) redundancy-encoded in the plurality of constellation-symbol streams and carried by the modulated optical carrier; wherein a first subset of the constellation-symbol streams (e.g., carrying **332,** FIGs. 3, 12) is such that an occurrence rate of different constellation symbols in each constellation-symbol stream of the first subset decreases as symbol energy increases; and wherein a second subset of the constellation-symbol streams (e.g., carrying **334,** FIGs. 3, 12) is such that different constellation symbols in each constellation-symbol stream of the second subset occur therein at a constant occurrence rate.

In some embodiments of the above apparatus, the electronic decoder comprises: an FEC decoder (e.g., **320,** FIG. 3) configured to generate a bit-word stream (e.g., **312,** FIG. 9; **1222,** FIG. 13) by redundancy-decoding first and second data streams (e.g., **312'** and **322',** FIG. 9) derived by the electronic decoder from the plurality of streams of values, the redundancy-decoding of the first and second data streams being performed using an FEC code; and a shaping decoder (e.g., **950,** FIG. 3) configured to generate the source data stream by redundancy-decoding the first bit-word stream using a shaping code.

In some embodiments of any of the above apparatus, the electronic decoder comprises a subcarrier demapper (e.g., **920,** FIG. 9; **1320,** FIG. 13) configured to: cause the first data stream to be derived from a first subset of the streams of values using a first constellation demapper (e.g., **930₁,** FIG. 9); and cause the second data stream to be derived from a second subset of the streams of values using a second constellation demapper (e.g., **930₂,** FIG. 9); and wherein the FEC decoder is configured to use the second data stream as a source of parity bits for correcting one or more errors in the first data stream.

In some embodiments of any of the above apparatus, the different respective modulated subcarriers are mutually orthogonal (e.g., in accordance with an OFDM scheme).

While this disclosure includes references to illustrative embodiments, this specification is not intended to be construed in a limiting sense.

For example, some embodiments can be designed and configured to use multiple FEC codes and multiple corresponding FEC encoders and decoders. Some of such embodiments may be constructed using multiple nominal copies of a processing circuit shown in FIG. 3 and including the elements **310-330,** with each of the nominal copies connected to feed the subcarrier mapper. Some of such embodiments may be also constructed using multiple nominal copies of a processing circuit shown in FIG. 9 and including the elements **930-950,** with each of the nominal copies connected to be fed by the subcarrier demapper.

Various modifications of the described embodiments, as well as other embodiments within the scope of the disclosure, which are apparent to persons skilled in the art to which the disclosure pertains are deemed to lie within the principle and scope of the disclosure, e.g., as expressed in the following claims.

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

Unless explicitly stated otherwise, each numerical value and range should be interpreted as being approximate as if the word "about" or "approximately" preceded the value or range. Also, unless explicitly stated otherwise, each named distribution or function type should be interpreted as being an example as if the words "such as" preceded the distribution or function name.

It will be further understood that various changes in the details, materials, and arrangements of the parts which have been described and illustrated in order to explain the nature of this disclosure may be made by those skilled in the art without departing from the scope of the disclosure, e.g., as expressed in the following claims.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

The description and drawings merely illustrate the principles of the disclosure. It will thus be appreciated that those of ordinary skill in the art will be able to devise various arrangements that, although not explicitly described or shown herein, embody the principles of the disclosure and are included within its spirit and scope. Furthermore, all examples recited herein are principally intended expressly to be only for pedagogical purposes to aid the reader in understanding the principles of the disclosure and the concepts contributed by the inventor(s) to furthering the art, and are to be construed as being without limitation to such specifically recited examples and conditions. Moreover, all statements herein reciting principles, aspects, and embodiments of the disclosure, as well as specific examples thereof, are intended to encompass equivalents thereof.

The functions of the various elements shown in the figures, including any functional blocks labeled as "processors" and/or "controllers," may be provided through the use of dedicated hardware as well as hardware capable of executing software in association with appropriate software. Some circuit elements may be implemented using, without limitation, digital signal processor (DSP) hardware, an application specific integrated circuit (ASIC), a field programmable gate array (FPGA), a read only memory (ROM) for storing software, a random access memory (RAM), and non-volatile storage. Other hardware, conventional and/or custom, may also be included.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus comprising:
an optical data transmitter that comprises an optical modulator and an electronic encoder, the electronic encoder being configured to:
redundancy-encode an input data stream to generate a plurality of constellation-symbol streams; and
drive the optical modulator to modulate an optical carrier such that each of the constellation-symbol streams is carried by a different respective modulated subcarrier of the optical carrier;
wherein a first subset of the constellation-symbol streams is such that an occurrence rate of different constellation symbols in each constellation-symbol stream of the first subset decreases as symbol energy increases; and
wherein a second subset of the constellation-symbol streams is such that different constellation symbols in each constellation-symbol stream of the second subset occur therein at a constant occurrence rate.

2. The apparatus of claim 1,
wherein the electronic encoder comprises:
a first shaping encoder configured to generate a first bit-word stream by redundancy-encoding the input data stream in a pseudo-probabilistic manner; and
an FEC encoder configured to generate a parity data stream by redundancy-encoding the first bit-word stream using an FEC code, and
wherein the electronic encoder is configured to:
generate the first subset of the constellation-symbol streams using the first bit-word stream; and
generate the second subset of the constellation-symbol streams using the parity data stream.

3. The apparatus of claim 2,
wherein the electronic encoder further comprises at least a second shaping encoder configured to generate a second bit-word stream by redundancy-encoding the input data stream in a pseudo-probabilistic manner; and
wherein the electronic encoder is further configured to generate the first subset of the constellation-symbol streams using the second bit-word stream.

4. The apparatus of claim 3, wherein:
the first shaping encoder is configured to use a first shaping code; and
the second shaping encoder is configured to use a second shaping code that is different from the first shaping code.

5. The apparatus of claim 3 or 4,
wherein the electronic encoder further comprises a multiplexer configured to generate a multiplexed bit-word stream by multiplexing the first bit-word stream and the second bit-word stream; and
wherein the FEC encoder is configured to generate the parity data stream by redundancy-encoding the multiplexed bit-word stream using the FEC code.

6. The apparatus of any of claims 2 to 5,
wherein the electronic encoder further comprises:
a first constellation mapper configured to use a first constellation to convert the first bit-word stream into a corresponding first sequence of constellation symbols;
a second constellation mapper configured to use a second constellation to convert the parity data stream into a corresponding second sequence of constellation symbols; and
wherein the electronic encoder is configured to:
generate the first subset of the constellation-symbol streams using the first sequence of constellation symbols; and
generate the second subset of the constellation-symbol streams using the second sequence of constellation symbols.

7. The apparatus of any of claims 1 to 6,
wherein a communication channel corresponding to the optical carrier has a frequency-dependent SNR within a channel bandwidth; and
wherein the electronic encoder comprises a subcarrier mapper configured to cause:
the first subset of the constellation-symbol streams to be carried by a first set of one or more modulated subcarriers of the optical carrier, the one or more modulated subcarriers of the first set being in a spectral region of the channel bandwidth having SNR values that are smaller than a threshold value; and
the second subset of the constellation-symbol streams to be carried by a second set of one or more modulated subcarriers of the optical carrier, the one or more modulated subcarriers of the second set being in a spectral region of the channel bandwidth having SNR values that are greater than the threshold value.

8. The apparatus of claim 7, wherein the subcarrier mapper is configured to cause the second set of one or more modulated subcarriers to include at least two modulated subcarriers.

9. The apparatus of claim 7, wherein the subcarrier mapper is configured to cause the second set of one or more modulated subcarriers to include a modulated subcarrier approximately centered on the optical carrier.

10. The apparatus of claim 7, wherein the subcarrier mapper is configured to cause the first set of one or more modulated subcarriers to include a first modulated subcarrier and a second modulated subcarrier whose frequencies are symmetric with respect to a frequency of the optical carrier.

11. The apparatus of claim 10, wherein the electronic encoder is configured to:
cause the first modulated subcarrier to carry a first constellation-symbol stream of the plurality; and
cause the second modulated subcarrier to carry a second constellation-symbol stream of the plurality, the second constellation-symbol stream being generated by applying complex conjugation to symbols of the first constellation-symbol stream.

12. The apparatus of claim 7, wherein the subcarrier mapper is configured to cause the second set of one or more modulated subcarriers to include a first modulated subcarrier and a second modulated subcarrier whose frequencies are symmetric with respect to a frequency of the optical carrier.

13. The apparatus of claim 12, wherein the electronic encoder is configured to:
cause the first modulated subcarrier to carry a first constellation-symbol stream of the plurality; and
cause the second modulated subcarrier to carry a second constellation-symbol stream of the plurality, the second constellation-symbol stream being generated using Hermitian symmetry applied to symbols of the first constellation-symbol stream.

14. The apparatus of claim 7, wherein the subcarrier mapper is configurable based on SNR data representing the frequency-dependent SNR within the channel bandwidth.

15. The apparatus of any previous claim, wherein the electronic encoder is configured to cause at least some of the constellation-symbol streams to have different respective symbol rates.

16. The apparatus of any previous claim, wherein the different respective modulated subcarriers are mutually orthogonal.

17. An apparatus comprising:
an optical data receiver that comprises an optical demodulator and an electronic decoder, the electronic decoder being configured to process a plurality of streams of values representing an electrical RF signal generated by the optical demodulator in response to receiving a modulated optical carrier, each of the streams of values representing a respective one of a plurality of constellation-symbol streams, each carried by a different respective modulated subcarrier of the modulated optical carrier, the electronic decoder being configured to redundancy-decode the plurality of streams of values to recover a source data stream redundancy-encoded in the plurality of constellation-symbol streams and carried by the modulated optical carrier;
wherein a first subset of the constellation-symbol streams is such that an occurrence rate of different constellation symbols in each constellation-symbol stream of the first subset decreases as symbol energy increases; and
wherein a second subset of the constellation-symbol streams is such that different constellation symbols in each constellation-symbol stream of the second subset occur therein at a constant occurrence rate.

18. The apparatus of claim 17, wherein the electronic decoder comprises:
an FEC decoder configured to generate a bit-word stream by redundancy-decoding first and second data streams derived by the electronic decoder from the plurality of streams of values, the redundancy-decoding of the first and second data streams being performed using an FEC code; and
a shaping decoder configured to generate the source data stream by redundancy-decoding the first bit-word stream using a shaping code.

19. The apparatus of claim 17 or 18,
wherein the electronic decoder comprises a subcarrier demapper configured to:
cause the first data stream to be derived from a first subset of the streams of values using a first constellation demapper; and
cause the second data stream to be derived from a second subset of the streams of values using a second constellation demapper; and
wherein the FEC decoder is configured to use the second data stream as a source of parity bits for correcting one or more errors in the first data stream.

20. The apparatus of any of claims 17 to 19, wherein the different respective modulated subcarriers are mutually orthogonal.
